# EUROPEAN PATENT SPECIFICATION

(11) **EP 4 346 524 B1**
(45) Date of publication and mention of the grant of the patent: **25.03.2026**
(21) Application number: 22734063.5
(22) Date of filing: 27.05.2022
(51) Int. Cl.: A47J 36/42, F24D 19/00, F24H 1/00, F16K 1/00, F24H 9/00

(54) **BOILER**
KESSEL
CHAUDIÈRE

(30) Priority: 27.05.2021 IT 202100013874
(43) Date of publication of application: 10.04.2024
(73) Proprietor: De' Longhi Appliances S.r.l. Con Unico Socio, 31100 Treviso (IT)
(72) Inventor: ANTONEL, Alessandro, 31100 TREVISO (IT)
(74) Representative: Petraz, Gilberto Luigi
(86) International application number: PCT/IT2022/050147
(87) International publication number: WO 2022/249214

(56) References cited:
- EP-A1- 2 527 733
- EP-A1- 3 611 415
- WO-A1-2017/182664
- WO-A1-2019/058403

## Description

### FIELD OF THE INVENTION

The present invention concerns a boiler for generating steam and/or heating water, which can be used in household appliances or professional machines, such as, for example, ironing or cleaning apparatuses, coffee machines, steamers for cooking food, steam ovens, or suchlike.

### BACKGROUND OF THE INVENTION

Boilers used to generate steam and/or to heat water in household appliances and professional machines normally comprise a metal container, hermetically closed, provided with at least one aperture to feed water, a steam delivery exit and possibly an aperture/closure to discharge the water.

A heating element is normally associated with the metal container, generally a resistance or an electric plate, which functions as a heat source, which can be selectively activated to generate the desired quantity and/or quality of steam and/or water temperature.

It is known that, when the boiler is being used, limescale formations are generated inside the container, mainly consisting of calcium carbonate and/or other minerals such as magnesium, potassium, silicon, etc., which are normally found dissolved in water.

These limescale formations can remain in suspension or can deposit on the internal surfaces of the container to form incrustations of increasing thickness, in particular in correspondence with the hottest portions of the container.

The formation of layers of limescale reduces the effectiveness of heating the water, thus slowing down the transmission of heat with consequent waste of energy.

To remove the limescale, it is known to use a removable collection element, elongated in shape, also shaped like a gutter, configured to be inserted inside the container in order to collect the limescale and remove it.

However, this solution is not optimal for limescale removal, nor does it appear to be at least partly automatic or automatable. In fact, it implies a high involvement of the user who must first unscrew at least one closing cap of the exit aperture (an operation which can prove to be particularly tiring and risky), move the entire boiler to a sink, possibly shake the boiler in order to effectively rinse it and finally tightly close the closing cap.

These operations discourage the user who often does not carry out cleaning as often as required. Furthermore, during the cleaning of the boiler there is a risk that the user might suffer electric shocks because he has not disconnected the boiler from the electric power supply. Moreover, the user can be hit by possible splashes of still hot water.

There are boilers that are provided with a discharge manifold connected to the discharge aperture and defining a channel configured to be passed through by the water and any solid and/or aggregated particles.

These boilers also comprise a valve device associated with the discharge manifold and configured to selectively open/close the channel and selectively put it into communication with the outside.

Such a valve device is equipped with a ball shutter element that can be rotated about an axis of rotation and can be installed inside a pipe through which the water passes.

The valve device, while facilitating the cleaning of the boiler, nevertheless has some disadvantages, in particular with regard to the overall bulk and the use of the ball shutter, which over time may lose its effectiveness, especially for large quantities of water.

The valve device is therefore not optimal with regard to the fluidic seal and is equipped with a series of gaskets that can wear out over time.

Document WO 2017/182664 A1 describes a boiler which is provided with a limescale removal device rotatably disposed inside the boiler and with a discharge aperture closed by a plug, in which the rotation of the plug or of a knob can cause the removal device to rotate.

Document EP 2527733 A1 describes a boiler having a discharge outlet connected to a valve.

Document WO 2019/058403 A1 describes a boiler provided with a discharge manifold associated with a valve device comprising a ball shutter element, which therefore has the disadvantages described above.

Document EP 3611415 A1 concerns a connector functional for regulating a fluid flow in a pneumatic system.

There is therefore a need to perfect a boiler which can overcome at least one of the disadvantages of the state of the art.

One purpose of the present invention is therefore to provide a boiler that guarantees effective, fast and easy cleaning, in optimal safety conditions for the user.

Another purpose of the present invention is to provide a boiler that allows easy removal of the limescale inside it, without requiring special skills, efforts or risks for the user.

Another purpose of the present invention is to provide a boiler which is economical, compact, reliable and durable over time.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the present invention or variants to the main inventive idea.

In accordance with the above purposes, the present invention concerns a boiler for generating steam and/or for heating water, which comprises a container, preferably made of metal, provided with at least one feed aperture for the introduction of water inside it and with an aperture for discharging water and any solid and/or aggregate particles.

According to one aspect of the present invention, the boiler comprises a valve device provided with: a channel connected to the discharge aperture; at least one shutter element configured to selectively open/close the channel; and an actuator device associated with the shutter element and configured to move it linearly in a given direction of opening or closing of the channel.

The shutter element is configured to move in a direction that is axial to the channel.

In this way, the water and any solid and/or aggregate particles contained inside the container can be evacuated, when the need to carry out this operation arises, thanks to the controlled drive of the valve device that has an actuator that allows a linear motion of the shutter element, and not a rotary or roto-translational motion. Furthermore, with this solution, the valve device is much more compact and efficient than known valve devices, it has a lower risk of water leaks with greater safety for the user.

The presence of the valve device, which is selectively drivable, also allows to reduce the risk of a user coming into direct contact with the water and with the possible particles exiting the container, thus preventing the risk of burns due to high temperatures.

The presence of the valve device also reduces the activities and efforts by the user to open the boiler and make the inside of it accessible, thus promoting the operations for emptying the boiler. This presence also allows to automate, with pre-set times, the entire discharge and cleaning cycle of the boiler, reducing the activities required from the user to a minimum.

According to another aspect of the invention, the shutter element can be externally threaded and engage in a thread made in the valve device, so as to produce a screw-nut mechanism for the linear movement of the shutter element in such direction.

In accordance with another aspect of the invention, the shutter element can comprise a polygonal-shaped seating in which a rotating shaft associated with the actuator device is at least partly inserted.

In accordance with another aspect of the present invention, the boiler comprises a control unit configured to command the actuator device in such a way as to supply an opening torque in order to move the shutter element in the opening direction of the passage channel, which is greater than a closing torque suitable to move the shutter element in the opposite direction, and in particular equal to at least 1.5 times the closing torque.

By providing an opening torque much larger than the closing torque, possible blockages of the boiler are prevented, which can be caused, for example, by oxidation phenomena that can lead to a variation in the density of the material, with consequent appearance of states of compression of the materials, to deposits of limescale, or to dilation of the material caused by repeated cycles of thermal stress to which the boiler is subjected.

In accordance with another aspect of the invention, the shutter element can comprise a single fluidic sealing gasket for closing one end of the channel.

In accordance with another aspect of the invention, the gasket can be housed inside a seating made in a head portion of the shutter element. The position of the head gasket ensures that the water exiting from the boiler comes into contact only with one face of the latter, while the components that define the motion of the shutter element always remain dry, without risks of accumulation of limescale on them and/or of oxidation.

The possible limescale deposited on the thread of the valve device can be removed simply and quickly by the back and forth movement of the threaded shutter element that engages in the thread.

According to another aspect of the invention, the shutter element can be associated with a scraper element, configured to slide through the channel and the discharge aperture. In this way, any residues that accumulate on the edge can be removed effectively.

In accordance with the present invention, the channel is inclined downward by an angle α comprised between 0° and 20° with respect to a bottom wall of the container. This is in order to facilitate and speed up the emptying of the boiler.

In accordance with another aspect of the present invention, the valve device can comprise a connector for connection with a mouth in which the discharge aperture is made; the connector and the mouth defining at least part of the channel.

In accordance with another aspect of the present invention, the mouth and the connector can have corresponding substantially aligned internal surfaces. Preferably, the surfaces are located in continuity with each other, so as to eliminate possible steps or discontinuities on which limescale can deposit.

In accordance with another aspect of the present invention, the discharge aperture can be disposed on a lower portion of a lateral wall of the container.

The valve device can comprise a main body made of heat-resistant plastic material.

The actuator device can be associated with a position detector device, configured to detect at least the position of the shutter element.

The present invention also concerns a method for cleaning a boiler, which provides to command the operation of the actuator device at least as a function of one of either a command received or a predefined time interval, in such a way as to move the shutter element linearly in the given direction, which is axial to the channel, until the channel is at least partly opened, allowing water and any solid and/or aggregate particles to escape from the boiler.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a perspective view of a boiler according to the present invention and equipped with a valve device;
- fig. 2 is a first longitudinal section view of the boiler of fig. 1 with the valve device in a closed position;
- fig. 3 is a second longitudinal section view of the boiler of fig. 1 with the valve device in an open position.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

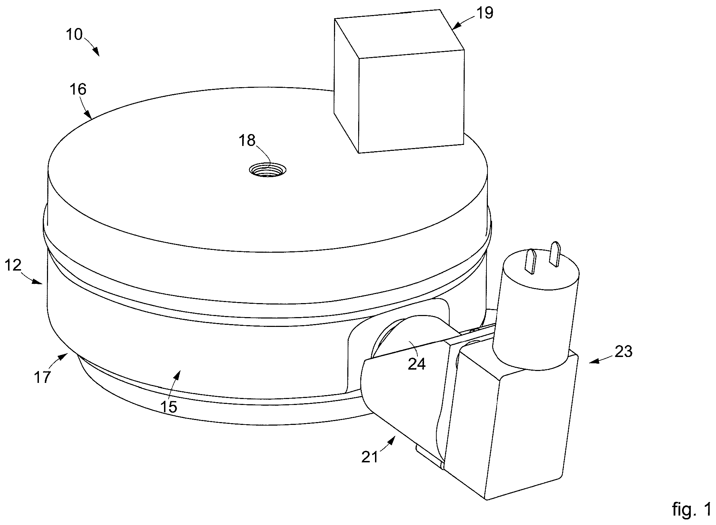

The embodiments described here in figs. 1 - 3 concern a boiler 10 for generating steam and/or for heating water according to the present invention.

Without constituting a limitation to the present invention, the boiler 10 can be used for household appliances or professional machines, such as, for example, apparatuses for ironing or cleaning, coffee machines, steam generators for cooking food, steam ovens, or any other apparatus whatsoever that requires the boiler 10.

The boiler 10 comprises a container 12, preferably made of metal, configured to contain water and possibly also to transform it into steam.

The container 12 comprises two shells, an upper shell 16 and a lower shell 17, which are, or are able to be, hermetically closed, and it is provided with at least one feed aperture 18 for the introduction of water inside it.

The container 12 can also be provided with an aperture for delivering the steam generated inside it. The steam delivery aperture can be connected to devices that use, and possibly regulate, the steam, for example an electromechanical valve 19, or suchlike.

The boiler 10 comprises at least one heating element 20 associated with the container 12 and configured to heat the water inside it to the desired temperature.

The heating element 20 can be installed integrally in contact with the container 12, so that it heats the container 12 and the water contained therein by thermal conduction.

The heating element 20 can be positioned inside the container 12 or, preferably, outside it, thus preventing it from being affected by the formation of limescale.

The container 12 is provided with a discharge aperture 11 which can be selectively opened/closed for the discharge of water and any particles, such as limescale, formed inside it.

The discharge aperture 11 can be made on a lateral wall 15 of the container 12 (as shown in the drawings).

According to a preferred solution, the discharge aperture 11 can be disposed on a lower portion of the lateral wall 15, that is, in proximity to a bottom wall 13 of the container 12.

In this way, it is possible to exploit the force of gravity to facilitate the escape of water and any solid and/or aggregate particles from the container 12 and, moreover, to guarantee that it is substantially completely emptied, since the discharge aperture 11 is disposed below the average water level. Furthermore, the user does not have to intervene to shake and/or incline the boiler 10 in order to facilitate the outflow of water.

In order to further facilitate the exit of the water from the container 12, it is possible to enclose the boiler 10 inside a support body in such a way that it is slightly inclined downward, on the side where the discharge aperture 11 is present.

The boiler 10 also comprises a valve device 21 provided with a channel 35 connected to the discharge aperture 11 and with at least one shutter element 22 configured to selectively open/close the channel 35.

The valve device 21 comprises an actuator device 23 associated with the shutter element 22 and configured to move it linearly in one sense or the other in a given direction A.

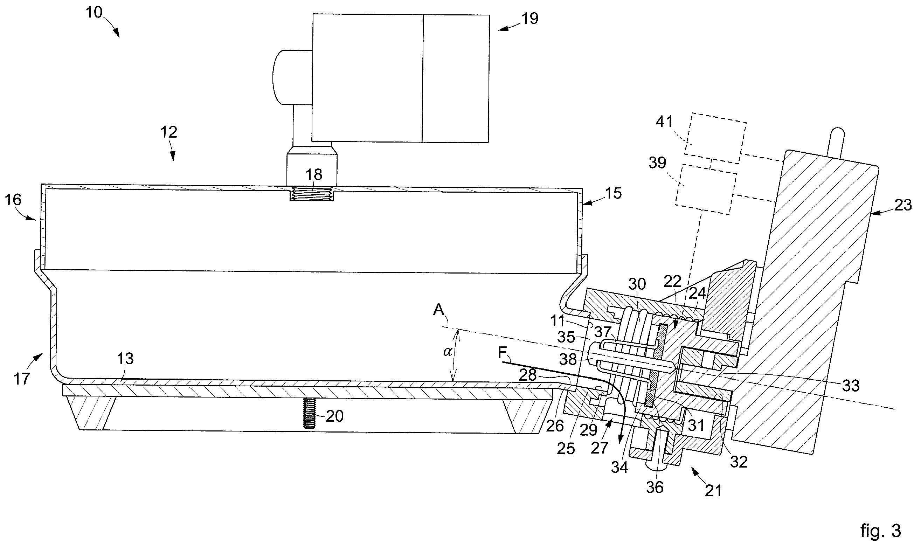

The direction A is substantially the direction of the flow F of water and any solid and/or aggregate particles that reach the channel 35 from the discharge aperture 11, see fig. 3.

In other words, the direction A is axial to the channel 35. The direction A can be substantially parallel to, or coincident with, a longitudinal axis of the channel 35.

According to some embodiments, the actuator device 23 can be configured to exert different torques and forces in order to move the shutter element 22 in one sense or the other in the direction A.

In particular, the actuator device 23 can be configured to supply an opening torque suitable to move the shutter element 22 in the opening direction of the passage channel 35, which is greater than a closing torque suitable to move the shutter element 22 in the opposite direction. In particular, the opening torque can be equal to at least 1.5 times the closing torque.

According to possible solutions, the opening torque can also be greater than or equal to 2 times the closing torque.

This advantageously allows to always guarantee a correct opening of the channel 35 and therefore the emptying of the container 12.

According to some embodiments, the actuator device 23 comprising a drive member, for example an electric motor.

According to other embodiments, the boiler 10 can comprise a control unit 41 configured to command the operation of the actuator device 23, for example as a function of a command received from a switch or at predefined time intervals.

The control unit 41 can be configured to regulate the electric current supplied to the actuator device 23, both in order to define its direction of rotation and also to modify its torque value to be exerted as a function of the opening and closing operations of the channel 35.

The channel 35 for the passage of water and any solid and/or aggregate particles is inclined downward by an angle α comprised between 0° and 20° with respect to the bottom wall 13, so as to guarantee an effective outflow of the water and of the possible particles.

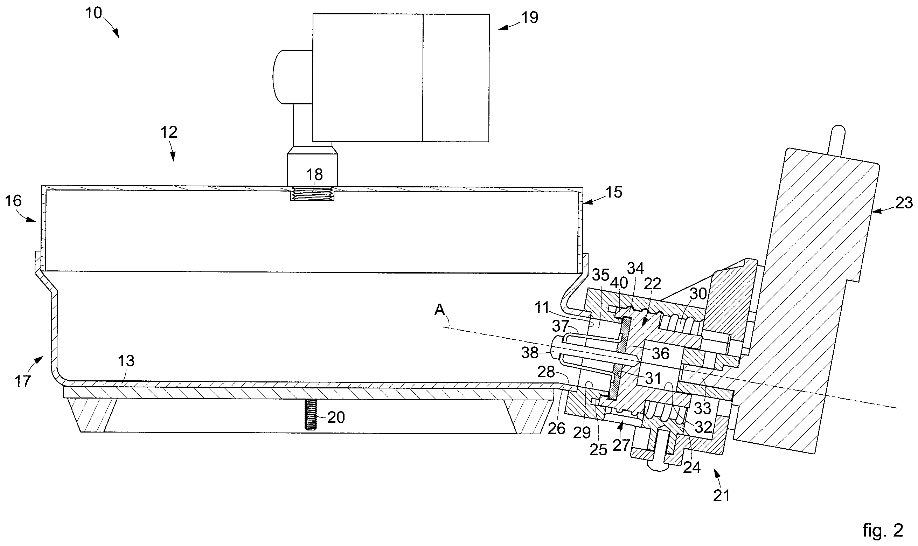

The shutter element 22 can be configured to assume a position of obstruction of the channel 35, that is, of closure of the valve device 21, as in fig. 2, a plurality of intermediate positions of partial opening of the channel 35, that is, of partial opening of the valve device 21, and a position of complete opening of the channel 35, as in fig. 3, that is, of complete opening of the valve device 21.

The valve device 21 can comprise a main body 24 which can be made of heat-resistant metal or plastic material, or any metal resistant to high temperatures and pressures.

The valve device 21 can comprise a tubular connector 25 for connection with a mouth 26 in which the discharge aperture **11** is made. The connector 25 can be connected to the mouth 26 in any way whatsoever, even by interference, exerting a suitable axial thrust, that is, in the direction A.

The connector 25 and the mouth 26 define at least part of the channel 35 for the passage of water inside the valve device 21.

The channel 35 is also communicating fluidically with an aperture 27, preferably made at the bottom in the valve device 21 and configured to allow the exit of water coming from the discharge aperture 11. When exiting, the water generates a flow F which follows a substantially L-shaped path. The water escaping from the aperture 27 can be suitably collected.

The aperture 27 can be made through in a lateral wall of the connector 25 which is positioned, during use, facing downward.

The mouth 26 and the connector 25 can have corresponding substantially aligned internal surfaces 28 and 29, so as to advantageously prevent the formation of limescale in the junction area between the container 12 and the valve device 21.

In particular, the internal surfaces 28 and 29 can be continuous to each other and also have a same inclination, to facilitate the complete emptying of the container 12.

The shutter element 22 is externally threaded and configured to engage with a thread 30 made inside the valve device 21.

The shutter element 22 can comprise a seating 32 in which a shaft 33 associated with the actuator device 23 is at least partly inserted, for example the drive shaft or a driven shaft.

The seating 32 can be polygonal in shape and allows the shaft 33 to rotate the shutter element 22 in one sense or the other about an axis defined by the direction A. The rotation of the shaft 33 determines a rotation of the shutter element 22 which, since it is threaded and engaged in a thread 30, slides in the direction A in one sense or the other, as a function of the sense in which the shaft 33 is driven. Consequently, the shutter element 22 is displaced axially inside the connector 25 and the channel 35, between at least one position in which it is completely aligned with the aperture 27, preventing the passage of water and any particles, and a position in which it is at least partly displaced with respect to the aperture 27 and it allows the water and any possible particles to escape.

The shaft 33 is always engaged in the seating 32, both in the position of complete opening of the valve device 21, see fig. 3, when the shaft 33 is substantially completely inserted into the seating 32, and also in the closed position, see fig. 2, in which at least a minimum portion of the shaft 33 is always engaged in the seating 32.

The travel of the shutter element 22 between the positions of complete opening and of complete closure can be comprised between about 5 mm and about 20 mm, preferably it is equal to about 10 mm. As can be appreciated, since the travel of the shutter element 22 is very limited, the valve device 21 and therefore the boiler 10 in general can be manufactured according to a very compact and space-saving configuration.

The shutter element 22 can therefore move in the direction A according to a screw-nut mechanism, where the screw is mobile and is represented by the shutter element 22 itself and the nut is fixed and is represented by the thread 30 made inside the valve device 21, in particular on the connector 25.

The shutter element 22 can advantageously comprise a single fluidic seal gasket 36 for closing one end 40 of the channel 35. In particular, this end 40 is the end of the connector 25 opposite to the end for connection with the mouth 26.

The gasket 36 can be for example in the form of a silicone disc or suchlike, and it can be housed inside a seating 31 made in a head portion 34 of the shutter element 22. The gasket 36 is therefore disposed between the discharge aperture **11** and the shutter element 22.

The fact that the gasket 36 is positioned in the seating 31 made in the head portion 34 substantially allows to keep dry all the elements of the valve device 21 which are located behind the head portion 34, for example the connection zone with the actuator device 23.

A scraper element 37 can be associated with the shutter element 22, which is configured to slide along the channel 35 and the discharge aperture **11** and therefore remove any limescale deposits. The scraper element 37 moves integrally with the shutter element 22 and it can be connected to the latter by means of suitable and known attachment means 38.

The actuator device 23 can be an electric gearmotor configured to rotate the shaft 33 and therefore the shutter element 22, and it can be configured to automatically actuate the valve device 21 on the basis of a supply of electric current.

By way of example only, the actuator device 23 can be activated by a user by means of a switch, or it can be conditioned by an automatic device which drives it after a determinate time interval has elapsed, or on the basis of the volume of water entering inside the container 12. The automatic device can be, for example, the control unit 41, or even a control unit that is separate from it.

The actuator device 23 can be associated with a position detector device 39, for example an encoder or a contact sensor, configured to detect at least the position of the shutter element 22, as well as the pressure exerted on the gasket 36 when it closes the channel 35.

The present invention also concerns a method for cleaning a boiler 10 according to the invention, the method providing to command the operation of the actuator device 23 at least as a function of one of either a command received or a predefined time interval, in such a way as to linearly move the shutter element 22 in the given direction A, which is axial to the channel 35, until the discharge aperture 11 is at least partly opened, allowing water and any solid and/or or aggregate particles to escape through it.

Substantially, therefore, the shutter element 22, in the situation of fig. 3, is in a position of maximum opening of the valve device 21, therefore the water and any particles can flow from the discharge aperture 11 into the channel 35 and then reach the aperture 27. The shutter element 22 can be taken into the position of complete closure of fig. 2 by driving the actuator device 23, which, through the shaft 33, rotates it in a first sense so that it moves linearly in the direction A toward a position of closure.

In order to open the valve device 21 again and once again take it to the position of fig. 3, the shutter element 22 is rotated in a second sense, opposite to the first sense, and it moves in the direction A in a second opening direction, opposite to the closing direction.

The valve device 21 can take the shutter element 22 to intermediate positions between the position of fig. 2 and fig. 3.

It is clear that modifications and/or additions of parts may be made to the boiler 10 as described heretofore, without departing from the field and scope of the present invention.

It is also clear that, although the present invention has been described with reference to some specific examples, a person of skill in the art shall certainly be able to achieve many other equivalent forms of boiler 10, having the characteristics as set forth in the claims and hence all coming within the field of protection defined thereby.

In the following claims, the sole purpose of the references in brackets is to facilitate reading and they must not be considered as restrictive factors with regard to the field of protection claimed in the specific claims.

## Claims

1. Boiler (10) comprising a container (12) provided with at least one feed aperture (18) and with a discharge aperture (11), **characterized in that** it comprises a valve device (21) provided with a channel (35) which is connected to said discharge aperture (11) and is communicating fluidically with an aperture (27) made at a bottom in the valve device (21), at least one shutter element (22) configured to open or close said channel (35) and an actuator device (23) comprising a drive member associated with said shutter element (22) and configured to move said shutter element (22) linearly in a given direction (A) of opening or closing of the channel (35) which is axial to said channel (35), wherein said channel (35) is inclined downward by an angle (α) comprised between 0° and 20° with respect to a bottom wall (13) of said container (12), said angle (α) being greater than 0°.

2. Boiler (10) as in claim 1, **characterized in that** said at least one shutter element (22) is externally threaded and engages in a thread (30) made in said valve device (21), so as to produce a screw-nut mechanism.

3. Boiler (10) as in claim 1 or 2, **characterized in that** said at least one shutter element (22) comprises a polygonal-shaped seating (32) in which a rotating shaft (33) associated with the actuator device (23) is at least partly inserted.

4. Boiler (10) as in one or the other of the previous claims, **characterized in that** it comprises a control unit (41) configured to command said actuator device (23) in such a way as to supply an opening torque in order to move said shutter element (22) in the opening direction of the passage channel (35), which is greater than a closing torque suitable to move the shutter element (22) in the opposite direction, and equal to at least 1.5 times said closing torque.

5. Boiler (10) as in one or the other of the previous claims, **characterized in that** said at least one shutter element (22) comprises a single fluidic seal gasket (36) for closing one end (40) of said channel (35).

6. Boiler (10) as in claim 5, **characterized in that** said gasket (36) is housed inside a seating (31) made in a head portion (34) of said at least one shutter element (22).

7. Boiler (10) as in one or the other of the previous claims, **characterized in that** with said at least one shutter element (22) there is associated a scraper element (37) configured to slide through said channel (35) and said discharge aperture (11).

8. Boiler (10) as in one or the other of the previous claims, **characterized in that** said valve device (21) comprises a connector (25) for connection with a mouth (26) in which said discharge aperture (11) is made, said connector (25) and said mouth (26) defining at least part of said channel (35).

9. Boiler (10) as in claim 8, **characterized in that** said connector (25) comprises the aperture (27) made through in a lateral wall thereof and disposed, during use, facing downward, and said shutter element (22) is axially mobile inside said connector (25) between at least one position in which it is completely aligned with said aperture (27) and a position in which it is at least partly displaced with respect to said aperture (27).

10. Boiler (10) as in claim 8 or 9, **characterized in that** said mouth (26) and said connector (25) have corresponding substantially aligned internal surfaces (28, 29).

11. Boiler (10) as in one or the other of the previous claims, **characterized in that** said discharge aperture (11) is disposed on a lower portion of a lateral wall (15) of said container (12).

12. Boiler (10) as in one or the other of the previous claims, **characterized in that** said valve device (21) comprises a main body (24) made of heat-resistant plastic material.

13. Boiler (10) as in one or the other of the previous claims, **characterized in that** said actuator device (23) is associated with a position detector device (39) configured to detect at least the position of said at least one shutter element (22).

14. Method for cleaning a boiler (10) as in any claim hereinbefore, **characterized in that** it provides to command the operation of said actuator device (23) at least as a function of one of either a command received or a predefined time interval, in such a way as to move said shutter element (22) linearly in said given direction (A) which is axial to said channel (35) until said channel (35) is at least partly opened, allowing water and any solid and/or aggregate particles to escape from said boiler (10).

15. Method as in claim 14, **characterized in that** it provides to command said actuator device (23) in such a way as to supply an opening torque in order to move said shutter element (22) in the opening direction of the passage channel (35), which is greater than a closing torque suitable to move the shutter element (22) in the opposite direction, and equal to at least 1.5 times said closing torque.

## Patentansprüche

1. Boiler (10) umfassend einen Behälter (12), der mit mindestens einer Zufuhröffnung (18) und einer Auslassöffnung (11) versehen ist, **dadurch gekennzeichnet, dass** er umfasst: eine Ventilvorrichtung (21), die mit einem Kanal (35) versehen ist, der mit der Auslassöffnung (11) verbunden ist und in Fluidverbindung mit einer Öffnung (27) steht, die an einer Unterseite in der Ventilvorrichtung (21) vorliegt, mindestens ein Verschlusselement (22), das zum Öffnen oder Schließen des Kanals (35) ausgebildet ist, und eine Betätigungsvorrichtung (23), die ein Antriebselement umfasst, das mit dem Verschlusselement (22) verbunden und so konfiguriert ist, dass sie das Verschlusselement (22) in einer bestimmten axial zu dem Kanal (35) verlaufenden Richtung (A) des Öffnens oder Schließens des Kanals (35) linear bewegt, wobei der Kanal (35) in einem Winkel (α) zwischen 0° und 20° in Bezug auf eine Bodenwand (13) des Behälters (12) nach unten geneigt ist, wobei der Winkel (α) größer als 0° ist.

2. Boiler (10) nach Anspruch 1, **dadurch gekennzeichnet, dass** das mindestens eine Verschlusselement (22) mit einem Außengewinde versehen ist und in ein in der Ventilvorrichtung (21) ausgebildetes Gewinde (30) eingreift, um einen Schrauben-Mutter-Mechanismus herzustellen.

3. Boiler (10) nach Anspruch 1 oder 2, **dadurch gekennzeichnet, dass das** mindestens eine Verschlusselement (22) einen polygonförmigen Sitz (32) aufweist, in den eine mit der Betätigungsvorrichtung (23) verbundene Drehwelle (33) zumindest teilweise eingeführt ist.

4. Boiler (10) nach einem der vorstehenden Ansprüche, **dadurch gekennzeichnet, dass** er eine Steuereinheit (41) umfasst, die so konfiguriert ist, dass sie die Betätigungsvorrichtung (23) so steuert, dass ein Öffnungsdrehmoment bereitgestellt wird, um das Verschlusselement (22) in Öffnungsrichtung des Durchgangskanals (35) zu bewegen, das größer ist als ein Schließdrehmoment, das geeignet ist, das Verschlusselement (22) in die entgegengesetzte Richtung zu bewegen, und mindestens dem 1.5-fachen des Schließdrehmoments entspricht.

5. Boiler (10) nach einem der vorhergehenden Ansprüche, **dadurch gekennzeichnet, dass** das mindestens eine Verschlusselement (22) eine einzige Fluiddichtung (36) zum Verschließen eines Endes (40) des Kanals (35) umfasst.

6. Boiler (10) nach Anspruch 5, **dadurch gekennzeichnet, dass** die Dichtung (36) in einer Aufnahme (31) untergebracht ist, die in einem Kopfabschnitt (34) des mindestens einen Verschlusselements (22) ausgebildet ist.

7. Boiler (10) nach einem der vorhergehenden Ansprüche, **dadurch gekennzeichnet, dass** mit dem mindestens einen Verschlusselement (22) ein Abstreifelement (37) verbunden ist, das so konfiguriert ist, dass es durch den Kanal (35) und die Auslassöffnung (11) gleitet.

8. Boiler (10) nach einem der vorhergehenden Ansprüche, **dadurch gekennzeichnet, dass** die Ventilvorrichtung (21) ein Verbindungsstück (25) zum Verbinden mit einer Öffnung (26) umfasst, in der die Auslassöffnung (11) ausgebildet ist, wobei das Verbindungsstück (25) und die Öffnung (26) zumindest einen Teil des Kanals (35) definieren.

9. Boiler (10) nach Anspruch 8, **dadurch gekennzeichnet, dass** das Verbindungsstück (25) die Öffnung (27) umfasst, die durch eine Seitenwand desselben hindurch ausgebildet und während des Gebrauchs nach unten gerichtet ist, und dass das Verschlusselement (22) innerhalb des Verbindungsstücks (25) zwischen mindestens einer Position, in der es vollständig mit der Öffnung (27) ausgerichtet ist, und einer Position, in der es zumindest teilweise gegenüber der Öffnung (27) verschoben ist, axial beweglich ist.

10. Boiler (10) gemäß Anspruch 8 oder 9, **dadurch gekennzeichnet, dass** die Öffnung (26) und das Verbindungsstück (25) entsprechende, im Wesentlichen fluchtende Innenflächen (28, 29) aufweisen.

11. Boiler (10) nach einem der vorhergehenden Ansprüche, **dadurch gekennzeichnet, dass** die Auslassöffnung (11) an einem unteren Abschnitt einer Seitenwand (15) des Behälters (12) angeordnet ist.

12. Boiler (10) nach einem der vorhergehenden Ansprüche, **dadurch gekennzeichnet, dass** die Ventilvorrichtung (21) einen Hauptkörper (24) aus hitzebeständigem Kunststoffmaterial umfasst.

13. Boiler (10) nach einem der vorstehenden Ansprüche, **dadurch gekennzeichnet, dass** die Betätigungsvorrichtung (23) mit einer Positionsdetektionsvorrichtung (39) verbunden ist, die so konfiguriert ist, dass sie zumindest die Position des mindestens einen Verschlusselements (22) erfasst.

14. Verfahren zum Reinigen eines Boilers (10) nach einem der vorstehenden Ansprüche, **dadurch gekennzeichnet, dass** es vorsieht, den Betrieb der Betätigungsvorrichtung (23) zumindest in Abhängigkeit von einem empfangenen Befehl oder einem vordefinierten Zeitintervall so zu steuern, dass das Verschlusselement (22) linear in der gegebenen Richtung (A), die axial zu dem Kanal (35) verläuft, bewegt wird, bis der Kanal (35) zumindest teilweise geöffnet ist, wodurch Wasser und alle festen und/oder aggregierten Partikel aus dem Boiler (10) entweichen können.

15. Verfahren nach Anspruch 14, **dadurch gekennzeichnet, dass** es vorsieht, die Betätigungsvorrichtung (23) so zu steuern, dass ein Öffnungsdrehmoment bereitgestellt wird, um das Verschlusselement (22) in Öffnungsrichtung des Durchgangskanals (35) zu bewegen, das größer ist als ein Schließdrehmoment, das geeignet ist, das Verschlusselement (22) in die entgegengesetzte Richtung zu bewegen, und mindestens dem 1.5-fachen des Schließdrehmoments entspricht.

## Revendications

1. Chaudière (10) comprenant un récipient (12) pourvu d'au moins une ouverture d'alimentation (18) et d'une ouverture de décharge (11), **caractérisée en ce qu'**elle comprend un dispositif de soupape (21) pourvu d'un canal (35) qui est relié à ladite ouverture de décharge (11) et communique fluidiquement avec une ouverture (27) ménagée au niveau d'un fond dans le dispositif de soupape (21), au moins un élément obturateur (22) configuré pour ouvrir ou fermer ledit canal (35) et un dispositif actionneur (23) comprenant un élément d'entraînement associé audit élément obturateur (22) et configuré pour déplacer ledit élément obturateur (22) linéairement dans une direction donnée (A) d'ouverture ou de fermeture du canal (35) qui est axiale par rapport audit canal (35), dans laquelle ledit canal (35) est incliné vers le bas d'un angle (α) compris entre 0° et 20° par rapport à une paroi de fond (13) dudit récipient (12), ledit angle (α) étant supérieur à 0°.

2. Chaudière (10) selon la revendication 1, **caractérisée en ce que** ledit au moins un élément obturateur (22) est fileté extérieurement et s'engage dans un filetage (30) réalisé dans ledit dispositif de soupape (21), de manière à produire un mécanisme vis-écrou.

3. Chaudière (10) selon la revendication 1 ou 2, **caractérisée en ce que** ledit au moins un élément obturateur (22) comprend un siège de forme polygonale (32) dans lequel un arbre rotatif (33) associé au dispositif actionneur (23) est au moins partiellement inséré.

4. Chaudière (10) selon l'une ou l'autre des revendications précédentes, **caractérisée en ce qu'**elle comprend une unité de commande (41) configurée pour commander ledit dispositif actionneur (23) de manière à fournir un couple d'ouverture afin de déplacer ledit élément obturateur (22) dans la direction d'ouverture du canal de passage (35), qui est supérieur à un couple de fermeture approprié pour déplacer l'élément obturateur (22) dans la direction opposée, et égal à au moins 1.5 fois ledit couple de fermeture.

5. Chaudière (10) selon l'une ou l'autre des revendications précédentes, **caractérisée en ce que** ledit au moins un élément obturateur (22) comprend un joint d'étanchéité fluidique unique (36) pour fermer une extrémité (40) dudit canal (35).

6. Chaudière (10) selon la revendication 5, **caractérisée en ce que** ledit joint (36) est logé à l'intérieur d'un siège (31) réalisé dans une partie tête (34) dudit au moins un élément obturateur (22).

7. Chaudière (10) selon l'une ou l'autre des revendications précédentes, **caractérisée en ce qu'**un élément racleur (37) configuré pour coulisser à travers ledit canal (35) et ladite ouverture de décharge (11) est associé audit au moins un élément obturateur (22).

8. Chaudière (10) selon l'une ou l'autre des revendications précédentes, **caractérisée en ce que** ledit dispositif de soupape (21) comprend un connecteur (25) pour la connexion avec une embouchure (26) dans laquelle ladite ouverture de décharge (11) est réalisée, ledit connecteur (25) et ladite embouchure (26) définissant au moins une partie dudit canal (35).

9. Chaudière (10) selon la revendication 8, **caractérisée en ce que** ledit connecteur (25) comprend l'ouverture (27) pratiquée dans une paroi latérale de celui-ci et disposée, pendant l'utilisation, tournée vers le bas, et ledit élément obturateur (22) est mobile axialement à l'intérieur dudit connecteur (25) entre au moins une position dans laquelle il est complètement aligné avec ladite ouverture (27) et une position dans laquelle il est au moins partiellement déplacé par rapport à ladite ouverture (27).

10. Chaudière (10) selon la revendication 8 ou 9, **caractérisée en ce que** ladite embouchure (26) et ledit connecteur (25) ont des surfaces internes (28, 29) sensiblement alignées correspondantes.

11. Chaudière (10) selon l'une ou l'autre des revendications précédentes, **caractérisée en ce que** ladite ouverture de décharge (11) est disposée sur une partie inférieure d'une paroi latérale (15) dudit récipient (12).

12. Chaudière (10) selon l'une ou l'autre des revendications précédentes, **caractérisée en ce que** ledit dispositif de soupape (21) comprend un corps principal (24) en matériau plastique résistant à la chaleur.

13. Chaudière (10) selon l'une ou l'autre des revendications précédentes, **caractérisée en ce que** ledit dispositif actionneur (23) est associé à un dispositif de détection de position (39) configuré pour détecter au moins la position dudit au moins un élément obturateur (22).

14. Procédé de nettoyage d'une chaudière (10) selon l'une quelconque des revendications précédentes, **caractérisé en ce qu'**il prévoit de commander le fonctionnement dudit dispositif actionneur (23) au moins en fonction d'une commande reçue ou d'un intervalle de temps prédéfini, de manière à déplacer ledit élément obturateur (22) linéairement dans ladite direction donnée (A) qui est axiale par rapport audit canal (35) jusqu'à ce que ledit canal (35) soit au moins partiellement ouvert, permettant à l'eau et à toute particule solide et/ou agrégée de s'échapper de ladite chaudière (10).

15. Procédé selon la revendication 14, **caractérisé en ce qu'**il prévoit de commander ledit dispositif actionneur (23) de manière à fournir un couple d'ouverture afin de déplacer ledit élément obturateur (22) dans la direction d'ouverture du canal de passage (35), qui est supérieur à un couple de fermeture approprié pour déplacer l'élément obturateur (22) dans la direction opposée, et égal à au moins 1.5 fois ledit couple de fermeture.
